Europäisches Patentamt

European Patent Office

Office européen des brevets

(11) Veröffentlichungsnummer: **0 328 052**
**A1**

## (12) EUROPÄISCHE PATENTANMELDUNG

(21) Anmeldenummer: **89102119.8**

(22) Anmeldetag: **08.02.89**

(51) Int. Cl.⁴: **B65D 81/34 , B65D 75/30 , H05B 6/64 , B65D 75/26**

(30) Priorität: **12.02.88 DE 3804325**

(43) Veröffentlichungstag der Anmeldung:
**16.08.89 Patentblatt 89/33**

(84) Benannte Vertragsstaaten:
**AT BE CH ES FR GB IT LI NL SE**

(71) Anmelder: **Scheuch Folien-u.Papierverarbeitung GmbH & Co. KG**
**Rheinstrasse 48**
**D-6109 Mühltal 1(DE)**

(72) Erfinder: **Oeser, Florian**
**Seeheimer Strasse 18**
**D-6100 Darmstadt-Eberstadt(DE)**

(74) Vertreter: **Kossobutzki, Walter, Dipl.-Ing.(FH)**
**Waldstrasse 6**
**D-5419 Helferskirchen(DE)**

(54) **Gasdichte Verpackung.**

(57) Die Erfindung bezieht sich auf eine gasdichte Verpackung für insbesondere lichtempfindliche und in der Verpackung erwärmbare Lebensmittel, bestehend aus einem zumindest in einem Randbereich durch Schweißung oder Siegelung verschließbaren Beutel aus einer Kunststoffolie, die an ihrer Außenseite mit einer Aluminiumfolie kaschiert oder mit einer metallisierten Kunststoffolie beschichtet ist.

Um eine gasdichte Verpackung für insbesondere lichtempfindliche und in der Verpackung erwärmbare Lebensmittel zu schaffen, die einerseits die erforderliche Schutzfunktion erreicht, andererseits aber auch die Möglichkeit bietet, daß die Lebensmittel in der Verpackung durch Mikrowellen erwärmt werden können, wird bei einer Verpackung der eingangs beschriebenen Art vorgeschlagen, daß die Aluminiumfolie oder die metallisierte Kunststoffolie zumindest in einem Teil des verschließbaren Randbereiches über die Kunststoffolie hinausragt und mit derselben durch einen peelfähigen Kaschierkleber ablösbar verbunden ist.

Fig. 3

**Gasdichte Verpackung**

Die Erfindung bezieht sich auf eine gasdichte Verpackung für insbesondere lichtempfindliche und in der Verpackung erwärmbare Lebensmittel, bestehend aus einem zumindest in einem Randbereich durch Schweißung oder Siegelung verschließbaren Beutel aus einer Kunststoffolie, die an ihrer Außenseite mit einer Aluminiumfolie kaschiert oder mit einer metallisierten Kunststoffolie beschichtet ist.

Lebensmittel mit hoher Lichtempfindlichkeit, die mittels des Verpackungsmaterials vor dem Einfluß externen Sauerstoffs, Wasserstoffs, Aromastoffen oder vor dem Verlust derselben über einen längeren Lagerzeitraum geschützt werden sollen, werden unter Verwendung von Aluminiumfolien oder metallisierten Kunststoffolien, die hervorragende Produktschutzqualitäten besitzen, verpackt. Dabei besteht die Verpackung meist aus einem Beutel mit rechteckiger Grundfläche, der zumindest an drei Seitenkanten durch Schweißung oder Siegelung verschlossen ist.

Die Verpackung bzw. der Beutel besteht dabei beispielsweise aus einer zweischichtigen Verbundfolie, beispielsweise Polyäthylen und Aluminium, die durch einen Kaschierkleber fest und unlösbar miteinander verbunden sind. Bei der Bildung des Beutels bzw. der Verpackung sind die beiden Polyäthylen-Schichten einander zugewandt, da dieselben gute Siegeleigenschaften besitzen. Die Außenfläche der zweischichtigen Verbundfolie, also die Alumini umfolie bzw.- schicht, ist mit einer PETP- oder Polypropylenfolie kaschiert, die mit der Aluminiumfolie bzw.- schicht ebenfalls durch einen Kaschierkleber fest und unlösbar verbunden ist.

Eine solche Verpackung mit einer Aluminiumfolie hat jedoch bei ihrer Benutzung für Lebensmittel, die vor dem Verzehr in der Verpackung erwärmt werden, den Nachteil, daß eine Erwärmung der Lebensmittel durch Mikrowellen nicht möglich ist. Es sind zwar mikrowellenherdtaugliche Verpackungen bekannt, die aus Werkstoffkombinationen ohne Aluminiumfolien bestehen. Derartige Verpackungen haben jedoch, wie bereits oben ausgeführt, nicht die für manche Lebensmittel erforderliche Schutzfunktion.

Der Erfindung liegt deshalb die Aufgabe zugrunde, eine gasdichte Verpackung für insbesondere lichtempfindliche und in der Verpackung erwärmbare Lebensmittel zu schaffen, die einerseits die erforderliche Schutzfunktion erreicht, andererseits aber auch die Möglichkeit bietet, daß die Lebensmittel in der Verpackung durch Mikrowellen erwärmt werden können.

Zur Lösung dieser Aufgabe wird gemäß der Erfindung bei einer Verpackung der eingangs beschriebenen Art vorgeschlagen, daß die Aluminiumfolie oder die metallisierte Kunststoffolie zumindest in einem Teil des verschließbaren Randbereiches über die Kunststoffolie hinausragt und mit derselben durch einen peelfähigen Kaschierkleber ablösbar verbunden ist. Dabei besteht dann die innere Kunststoffolie beispielsweise aus einer Polyäthylen-Polypropylen Duplexschicht, wobei die Polypropylenschicht der Aluminiumfolie bzw. der metallisierten Kunststofffolie zugewandt ist.

Bei einer solchen Verpackung ist es möglich, die Aluminiumfolie vor der Erwärmung durch Mirkowellen vollflächig - ohne daß die eigentliche Verpackung beschädigt oder zerstört wird - zu entfernen und dann die Lebensmittel in der Verpackung durch Mikrowellen zu erwärmen. In dem über die Kunststoffolie hinausragenden bzw. überstehenden Bereich können die Aluminiumfolien leicht erfasst werden und von der innenliegenden Kunststoffolie bzw. dem innenliegenden Verbund vollflächig abgepeelt werden.

Weitere Merkmale einer Verpackung gemäß der Erfindung sind in den Ansprüchen 2 - 6 offenbart.

Die Erfindung wird nachfolgend anhand eines in einer Zeichnung dargestellten Ausführungsbeispieles näher erläutert. Dabei zeigen

Fig. 1 eine Draufsicht auf die Verpackung gemäß der Erfindung,

Fig. 2 einen vergrößerten, jedoch nicht maßstabsgetreuen Schnitt durch eine Mehrschichtfolie der Verpackung der Fig. 1 und

Fig. 3 einen nicht maßstabsgetreuen Schnitt durch den Kopfbereich der Verpackung der Fig. 1.

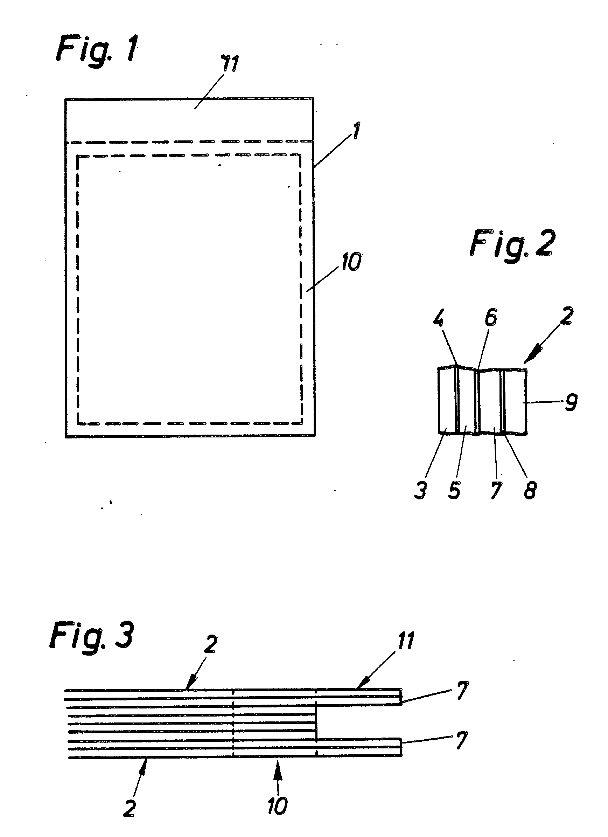

In der Fig. 1 der Zeichnung ist eine Verpackung für lichtempfindliche und in der Verpackung erwärmbare Lebensmittel gezeigt, die aus einem Beutel 1 besteht. Dabei wird der Beutel 1 in diesem Ausführungsbeispiel aus zwei Mehrschichtfolien 2 (Fig. 2) gebildet, die eine rechteckige Grundfläche besitzen.

Jede Mehrschichtfolie 2 besteht in diesem Ausführungsbeispiel aus einer Polyäthylen-Schicht 3, die über eine KaschierkleberSchicht 4 fest und unlösbar mit einer Polypropylen-Schicht 5 verbunden ist. Auf der freien Fläche der Polyproplen-Schicht 5 ist mittels eines besonderen Kaschierklebers 6 eine Aluminiumfolie 7 angeordnet, die ihrerseits über eine Kaschierkleber-Schicht 8 mit einer Polyester-Schicht 9 fest und unlösbar verbunden ist. Im vorliegenden Ausführungsbeispiel weisen die Aluminiumfolien 7 und die damit fest verbundenen Polyester-Schichten 9 eine größere Grundfläche auf als die aus der Polyäthylen-Schicht 3 und der Polypropylen-Schicht 5 bestehende Kunststoffolie 3,5. Wie die Figuren 1 und 3 deutlich erkennen lassen, ragen die Aluminiumfolien 7 mit den Polyester-Schichten 9 an einem Rand über die Kunststoffolie 3,5 hinaus.

Zur Bildung des Beutels 1 werden nun zwei derartige Mehrschichtfolien 2 so aufeinandergelegt, daß sich die Polyäthylen-Schichten 5 der beiden Mehrschichtfolien 2 gegenüberliegen und - nach dem Einfüllen bzw. Einlegen von Lebensmittel - an ihrem gesamten Rand 10 durch Siegelung derart miteinander verbunden werden, daß der geschlossene Beutel 1 entsteht. Die Fig. 3 zeigt dabei deutlich, daß die Aluminiumfolien 7 mit der Polyester-Schicht 9 beider Mehrschichtfolien 2 im Bereich des oberen Randes 11 des Beutels 1 vollkommen frei, also nicht miteinander verbunden sind. Für die Verbindung der Polypropylen-Schicht 5 mit der Aluminiumfolie 7 wird, wie bereits oben ausgeführt, ein besonderer Kaschierkleber 6 verwendet, der peelfähig ist, d. h., dieser Kaschierkleber 6 gibt die Möglichkeit, daß die Aluminiumfolie 7 mit der Polyester-Schicht 9 vollflächig von der aus Polyäthylen-Schicht 3 und Polypropylen-Schicht 5 bestehenden Kunststoffolie abgezogen bzw. entfernt werden kann. Zu diesem Zweck werden die beiden Aluminiumfolien 7 mit der Polyester-Schicht 9 in ihrem freien Randbereich 11 erfaßt und abgezogen.

Die vorbeschriebene Verpackung stellt einerseits sicher, daß die darin befindlichen Lebensmittel lichtgeschützt sind und andererseits nach dem Entfernen der Aluminiumfolie 7 problemlos mittels Mikrowellen erwärmt werden können.

In Abänderung des erläuterten Ausführungsbeispieles ist es möglich, andere Kunststoffschichten zu verwenden. Dabei muß jedoch auch sichergestellt sein, daß der Kaschierkleber 6 zwischen einer Kunststoffolie und der Aluminiumfolie 7 bzw. der metallisierten Kunststoffolie peelfähig ist und ein Entfernen bzw. Abziehen der Aluminiumfolie 7 bzw. der metallisierten Kunststoffolie zuläßt. Die einander zugewandten Schichten der Mehrschichtfolie 2 müssen jedoch aus einem solchen Kunststoff bestehen, der die Bildung einer Verpackung bzw. eines Beutels 1 durch Schweißung oder Siegelung zuläßt.

## Ansprüche

1. Gasdichte Verpackung für insbesondere lichtempfindliche und in der Verpackung erwärmbare Lebensmittel, bestehend aus einem zumindest in einem Randbereich durch Schweißung oder Siegelung verschließbaren Beutel aus einer Kunststoffolie, die an ihrer Außenseite mit einer Aluminiumfolie kaschiert oder mit einer metallisierten Kunststoffolie beschichtet ist, dadurch gekennzeichnet, daß die Aluminiumfolie (7) oder die metallisierte Kunststoffolie zumindest in einem Teil des verschließbaren Randbereiches über die Kunststoffolie hinausragt und mit derselben durch einen peelfähigen Kaschierkleber (6) ablösbar verbunden ist.

2. Verpackung nach Anspruch 1, dadurch gekennzeichnet, daß die Kunststoffolie (3,5) aus mindestens zwei durch einen Kaschierkleber (4) unlösbar miteinander verbundenen Kunststoffschichten (3,5) besteht.

3. Verpackung nach Anspruch 2, dadurch gekennzeichnet, daß die Kunststoffolie (3,5) aus einer Schicht (3) aus Polyäthylen und einer Schicht (5) aus Polypropylen besteht.

4. Verpackung nach mindestens einem der Ansprüche 1 - 3, dadurch gekennzeichnet, daß die Aluminiumfolie (7) an ihrer Außenseite mit einer zusätzlichen Kunststoffschicht (9) versehen ist.

5. Verpackung nach Anspruch 4, dadurch gekennzeichnet, daß die Aluminiumfolie (7) durch einen Kaschierkleber (8) unlösbar mit der zusätzlichen Kunststoffschicht (9) verbunden ist.

6. Verpackung nach Anspruch 4 oder 5, dadurch gekennzeichnet, daß die zusätzliche Kunststoffschicht (9) aus Polyester, Polyamid oder einer sonstigen, thermisch beständigen Kunststoffolie besteht.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 223 253 (TOYO ALUMINIUM K.K.) * Insgesamt * | 1-6 | B 65 D 81/34 |
| Y | GB-A- 764 980 (PAD-Y-WAX CO., INC.) * Insgesamt * | 1-6 | B 65 D 75/30 H 05 B 6/64 B 65 D 75/26 |
| P,X | DE-U-8 801 815 (SCHEUCH FOLIEN V. PAPIERVERARBEITUNG GmbH & CO.) * Insgesamt * | 1-6 | |
| A | EP-A-0 024 605 (PRODUITS FINDUS S.A.) * Insgesamt * | 1-6 | |
| A | US-A-4 676 857 (SCHARR et al.) * Insgesamt * | 1-6 | |
| A | EP-A-0 240 071 (UNILEVER N.V.) * Insgesamt * | 1-6 | |
| A | FR-A-2 323 594 (MARDON FLEXIBLE PACKAGING LTD) * Insgesamt * | 1-6 | RECHERCHIERTE SACHGEBIETE (Int. Cl.4) |
| A | WO-A-8 401 353 (LUDLOW CORP.) * Insgesamt * | 1-6 | B 65 D H 05 B B 32 B |
| A | FR-A-2 255 229 (SCHEUCH KG) * Insgesamt * | 1-6 | |
| A | EP-A-0 198 362 (GOURMEC LABORATORY CO.) * Figures; Spalten 10-12 * | 1-6 | |

Der vorliegende Recherchenbericht wurde für alle Patentansprüche erstellt

| Recherchenort | Abschlußdatum der Recherche | Prüfer |
|---|---|---|
| DEN HAAG | 20-05-1989 | DE LA MORINERIE B.M.S.B. |